# EUROPÄISCHE PATENTSCHRIFT

(11) **EP 1 870 152 B1**
(45) Veröffentlichungstag und Bekanntmachung des Hinweises auf die Patenterteilung: **23.05.2018**
(21) Anmeldenummer: 06012773.5
(22) Anmeldetag: 21.06.2006
(51) Int. Cl.: B01D 46/24

(54) **Filter mit austauschbarem Einsatzteil**
Filter with replacable insert
Filtre avec élément remplacable

(43) Veröffentlichungstag der Anmeldung: 26.12.2007
(73) Patentinhaber: Donaldson Filtration Deutschland GmbH, 42781 Haan (DE)
(72) Erfinder: Groth, Peter, 40885 Ratingen (DE); Jens Schäfer, 41352 Korschenbroich (DE); Abdelkhalic Rbayti, 40477 Düsseldorf (DE); Hans-Michael Schuster, 42781 Haan (DE)
(74) Vertreter: von Renesse, Dorothea

(56) Entgegenhaltungen:
- WO-A-2006/013333
- DE-A1- 2 506 359
- DE-A1- 3 541 370
- DE-A1- 10 052 524
- DE-A1- 10 309 428
- US-A- 4 925 466

## Beschreibung

Die Erfindung betrifft ein Filter, insbesondere für Druckgas- und Druckluftsysteme.

Druckgas- und insbesondere Druckfuftsysteme erfordern Filter zum Abscheiden von im Gasstrom mitgeführten, festen und flüssigen Fremdstoffen, beispielsweise Schmutzpartikel, Kondensat und Öl.

Derartige Filter bestehen im allgemeinen aus einem zweiteiligen Gehäuse mit einem Oberteil und einem Unterteil, die entweder miteinander verschraubt oder mittels einer Überwurfmutter oder eines Bajonettverschlusses miteinander verbunden sind. Das Gehäuseoberteil besitzt üblicherweise auf einander diametral gegenüber liegenden Seiten einen Einlass - und einen Auslasskanal. Der Einlasskanal mündet entweder zentral in ein in dem Unterteil angeordnetes, hohlzylindrisches Filterelement, oder in den Ringraum zwischen dem Filterelement und dem Gehäuse des Unterteils. Dementsprechend geht der Auslasskanal entweder von dem Ringraum oder vom Innern des Filterelements ab, je nachdem, ob das Filterelement von innen nach außen oder von außen nach innen durchströmt werden soll. Die Strömungsrichtung im Filter ist daher nach dem Einbau festgelegt und lässt sich in der Einbaulage nicht ändern. Mit der Strömungsrichtung ist gleichzeitig auch das Einsatzgebiet des Filters festgelegt; denn beim Staubfiltern wird das Filterelement von außen nach innen und beim Koaleszenzfiltern zum Abscheiden von Druckluftkondensat von innen nach. außen durchgeströmt. Die Mehrzahl der herkömmlichen Filter eignen sich daher entweder nur als Staub- oder nur als Koaleszenzfilter, wenn nach dem Einbau in das Druckluftsystem die Strömungsrichtung festgelegt ist.

Aus der DE 103 09 428 B4 ist ein Filter bekannt, bei dem zwischen dem Oberteil des Filters und dem in dem Unterteil angeordneten hohlzylindrischen Filterelement ein drehbarer Anschlussflansch angeordnet ist, wobei der Anschlussflansch einen Zuleitkanal, der in Verbindung mit dem in dem Inneren des zylindrischen Filterelement gebildeten Filterraum steht, und einen Ableitkanal aufweist, der in den Ringraum zwischen dem Filterelement und dem Unterteil des Gehäuses mündet. Durch eine punktsymmetrische Ausführung der dem Filterelement zugewandten Öffnungen des Einlass- und Auslasskanals in dem Oberteil des Filters kann durch eine Drehung des Anschlussflansches wahlweise entweder der Einlass- oder der Auslasskanal des Filters mit dem Filterraum in Verbindung gebracht werden. Folglich kann wahlweise durch eine einfache Drehung des Anschlussflansches die Richtung der Durchströmung des Filterelementes geändert werden.

Bei einem Einsatz derartiger Filter in einem Druckgas- oder Druckluftsystem müssen die Bauteile des Filters so ausgelegt werden, dass sie den, auftretenden Drücken standhalten können. Aus diesem Grund werden zumindest die Gehäuseteile des Filters regelmäßig aus Metall, insbesondere Aluminium gefertigt. Dies gilt regelmäßig auch für das den Einlass- und Auslasskanal aufweisende Oberteil des Filters (Filterkopf), wie es beispielsweise in der oben genannten DE 103 09 428 B4 offenbart ist.

Bei dem Filterkopf der DE 103 09 428 B4 weisen sowohl der Einlass- als auch der Auslasskanal einen waagerecht verlaufenden, geraden Abschnitt auf, der nach einem Bogen um 90° in einen senkrecht verlaufenden Abschnitt übergeht. Bei einem als Aluminium-Fräsbauteil oder -Gußteil ausgeführten Filterkopf kann ein solcher Verlauf des Einlass- und Auslasskanal auf einfache Weise durch zwei sich innerhalb des Bauteils treffende Lochfräsungen erzielt werden. Ein solcher Verlauf des Einlass- und Auslasskanals ist jedoch aus strömungstechnischer Hinsicht nicht optimal. Aus Gründen der Differenzdruckoptimierung kann insbesondere ein möglichst gleichförmiger Verlauf, das heißt insbesondere ohne Kanten und Absätze, und eine große Länge der Kanäle wünschenswert.

Der vorliegenden Erfindung liegt daher die Aufgabe zugrunde, einen zumindest hinsichtlich eines Nachteils des Stands der Technik verbesserten Filter zu schaffen. Insbesondere soll ein Filter geschaffen werden, der strömungstechnisch weiter optimiert ist.

Diese Aufgabe wird durch den Gegenstand des unabhängigen Anspruchs gelöst. Vorteilhafte Ausführungsformen sind Gegenstand der abhängigen Ansprüche.

Der Kern der Erfindung sieht vor, einen Filter der eingangs genannten Art bereitzustellen, der ein Oberteil mit mindestens einem Einlass- und einem Auslasskanal und ein das Filterelement aufnehmendes Unterteil aufweist, wobei das Oberteil ein Gehäuse und einen Einsatz aufweist, in dem der Einlass- und Auslasskanal verläuft.

Durch die erfindungsgemäße Zweiteilung des Oberteils des Filters können diese zwei Bauteile - das Gehäuse und der Einsatz - funktionsoptimiert ausgelegt werden. Insbesondere kann das Gehäuse dahingehend optimiert werden, den auftretenden Überdruck im Filterinnenraum zu kompensieren, während der Einsatz dazu ausgelegt werden kann, einen möglichst vorteilhaften Verlauf des Einlass- und Auslasskanals zu erzielen. Vorzugsweise kann der Einsatz drehbar innerhalb des Gehäuses befestigt sein.

Der Ein- und/oder Auslasskanal kann erfindungsgemäß vollumfänglich in dem Einsatz ausgebildet sein; er kann jedoch auch teilumfänglich ausgebildet sein, so dass dessen Kanalwände teilweise von dem Einsatz und teilweise von einem oder mehreren anderen Bauteilen des Filters gebildet werden.

In einer vorteilhaften Ausführungsform der vorliegenden Erfindung wird das Gehäuse aus einem Metall, vorzugsweise Aluminium gefertigt. Dadurch können auch mit geringen Wandstärken des Gehäuses hohe Überdrücke kompensiert werden.

Der Einsatz wird vorzugsweise aus Kunststoff gefertigt. Aufgrund der Vielzahl von Möglichkeiten zur Herstellung und Bearbeitung von (auch komplexen) Kunststoffbauteilen kann auf einfache Weise ein optimierter und gleichzeitig komplexer Verlauf des Einlass- und Auslasskanals erzielt werden kann. Die Auswahl des für den Einsatz verwendeten Werkstoffs kann aufgrund der erfindungsgemäßen Zweiteilung des Filteroberteils unter reduzierten Anforderungen an die Druckfestigkeit dieses Werkstoffs erfolgen, da der Einsatz durch das vorzugsweise druckfeste Gehäuse gestützt wird.

Vorzugsweise ist der Einsatz austauschbar innerhalb des Gehäuses angeordnet. Dies kann bei einem Defekt des Filteroberteils ermöglichen, kostengünstig nur das jeweils defekte Bauteil (Gehäuse oder Einsatz) auszutauschen. Die Austauschbarkeit des Einsatzes ermöglicht es des weiteren, ein einheitliches Gehäuse wahlweise mit einer Vielzahl von Einsätzen zu verbinden, die beispielsweise hinsichtlich des Verlaufs des Einlass- und Auslasskanals an unterschiedliche in dem Filter verwendete Filterelemente angepasst sind.

Um das erfindungsgemäße Filter in ein bestehendes System, beispielsweise ein Drücklüftsystem zu integrieren, weist das Gehäuse Einlass- und Auslassöffnungen auf, die sich mit den entsprechenden Öffnungen des Einlass- und Auslasskanals des Einsatzes (zumindest teilweise) überdecken. Vorzugsweise sind diese Einlass- und Auslassöffnungen des Gehäuses in Verbindungselemente integriert. Ein solches Verbindungselement kann sich beispielsweise als Innen- oder Außengewinde darstellen, die insbesondere bei einem metallischen Gehäuse einfach herstellbar ist. Vorzugsweise sind die Verbindungselemente gemäß den in den entsprechenden Systemen verwendeten und allgemein bekannten Schnellverschlüssen ausgebildet.

In einer vorteilhaften Ausführungsform der vorliegenden Erfindung mündet der Einlass- oder der Auslasskanal direkt oder indirekt in einen durch das Filtermaterial des Filterelementes begrenzten Filterraum, während der andere dieser Kanäle in einen Sammelraum mündet, der von dem Filterelement und dem Unterteil des Filters gebildet wird. Die Begriffe Filter- und Sammelraum sind nicht funktionell begrenzt, sondern dienen lediglich der begrifflichen Unterscheidung zwischen den beiden Volumina. Insbesondere kann das "Filterraum" genannte Volumen bei einer Umkehrung der Durchströmungsrichtung funktionell auch als Sammelraum dienen. Weiterhin weist das Filterelement ein Anschlusselement auf, das zwischen dem Oberteil des Filters und dem Filterelement angeordnet ist. Vorzugsweise ist das Anschlusselement fest oder lösbar mit dem Filterelement verbunden, so dass es mit diesem ausgewechselt werden kann. Das Anschlusselement weist mindestens einen Zulauf- und einen Ablaufkanal auf, wobei einer der Kanäle so ausgelegt ist, dass er den durch das Filterelement gebildeten Filterraum mit dem Einlass- oder Auslasskanal des Filteroberteils verbindet, während der andere Kanal den durch das Filterelement und das Filterunterteil gebildeten Sammelraum mit dem jeweils anderen Kanal (Einlass- oder Auslasskanal) verbindet.

Die Verwendung eines solchen Anschlusselements ist insbesondere dann vorteilhaft, wenn dieses drehbarer gegenüber dem Oberteil ausgelegt ist und durch eine Spiegel- oder Punktsymmetrie der dem Filterelement zugewandten Öffnungen des Einlass- und Auslasskanäle die Möglichkeit gegeben wird, den Filterraum wahlweise mit entweder dem Einlass- oder Auslasskanal zu verbinden und somit die Richtung der Durchströmung des Filterelementes zu verändern.

Insbesondere bei einer solchen Ausführungsform des erfindungsgemäßen Filters werden vorzugsweise hohlzylindrische Filterelemente verwendet. Der Filter ist dann vorzugsweise so ausgelegt, dass die Längsachse des zylindrischen Filterelementes sowohl die Drehachse des Anschlusselements als auch den Drehpunkt der punktsymmetrischen Öffnungen des Einlass- und Auslasskanals des Filteroberteils definiert.
Derartige hohlzylindrische Filterelemente sind vorzugsweise so ausgeführt, dass der (Zylinder-) Mantel - zumindest teilweise - aus einem Filtermaterial besteht, das auch aus mehreren Schichten unterschiedlichen Filtermaterials bestehen kann. Solche hohlzylindrischen Filterelemente lassen sich kostengünstig herstellen und zeichnen sich ferner durch ein vorteilhaftes Verhältnis von Bauraum zu wirksamer Filterfläche aus.

Die spiegel- oder punktsymmetrischen Öffnungen des Einlass- und Auslasskanals sind vorzugsweise nieren- oder halbkreisförmig ausgebildet. Auf diese Weise können bei einer kreisförmigen Anschlussfläche zwei strömungstechnisch günstige, möglichst große Öffnungen, die lediglich durch einen relativ schmalen Steg voneinander getrennt sind, ausgebildet werden.

In einer vorteilhaften Ausführungsform der vorliegenden Erfindung weist das Filterelement ein Leitelement auf, das die Strömung des zu filternden Mediums in eine gewünschte Richtung leitet und hierzu gegebenenfalls umlenken kann. Vorteilhafterweise befindet es sich in dem Bereich, in dem der Zulauf- oder Ablaufkanal beziehungsweise der Einlass- oder Auslasskanal in den Filterraum mündet. Bei dem vorzugsweise eingesetzten, zylindrischen Filterelement wird die Strömung des zu filternden Mediums vorzugsweise in die Richtung der Längsachse des Filterelements geleitet.

Das Leitelement kann fest oder austauschbar an dem Filterelement befestigt sein. Sofern das Filterelement mit einem oben beschriebenen Anschlusselement verbunden ist, kann das Leitelement auch in dieses Anschlusselement integriert oder daran befestigt sein.

Das Leitelement ist vorzugsweise als teilkreisförmige Teilfläche ausgebildet. Je nach Strömungsrichtung des zu filternden Mediums beim Eintritt in den Filterraum kann das Leitelement jedoch beliebig, beispielsweise auch rohrförmig oder eben ausgebildet sein.

In einer vorteilhaften Ausführungsform der vorliegenden Erfindung weist der Einlass- und/oder Auslasskanal einen dreidimensional gebogenen Verlauf seiner Längsachse(n) auf. Das heißt, anders als bei den aus dem Stand der Technik bekannten Filtern, wie sie beispielsweise in der DE 103 09 428 B4 offenbart sind, weist der Verlauf des Einlass- und/oder Auslasskanals nicht nur einen in einer Ebene gebogenen (d.h. zweidimensional gebogenen) Verlauf auf, sondern zusätzlich eine Biegung in mindestens einer zweiten Ebene, die zu der ersten Ebene nicht-parallel ist. Die (zentrale) Längsachse des Einlass- und/oder Auslaäskanals weist in diesem Fall somit einen dreidimensional gebogenen Verlauf auf.

Diese vorteilhafte Ausgestaltung des Ein- und Auslasskanals lässt sich mit anderen Worten auch wie folgt beschreiben: Der Bogenradius des jeweiligen Kanals ist größer als der halbe Durchmesser des Filteroberteils.

Durch einen solchen erfindungsgemäßen Verlauf des Einlass- und/oder Auslasskanals kann der im Filteroberteil zur Verfügung stehende Raum optimal ausgenutzt werden und im Vergleich zu den aus dem Stand der Technik bekannten Verläufen der Einlass- und Auslasskanäle größere Kanallängen erzielt werden.

Vorzugsweise weist der Einsatz des Filteroberteils mindestens eine Aufnahme für ein Funktionsbauteil auf. Bei einem solchen Funktionsbauteil kann es sich insbesondere um einen Geber einer Differenzdruckanzeige handeln. Der Geber der Differenzdruckanzeige kann in den Einsatz des Filteroberteils fest integriert sein. Vorzugsweise ist dieser jedoch austauschbar mit dem Einsatz des Filteroberteils verbunden, so dass dieser bei einem Austausch des Einsatzes wiederverwendet werden kann. Weiterhin hat ein austauschbarer Geber den Vorteil, dass er mit verschiedenen, an unterschiedliche Filterelemente angepassten Einsätzen des Filteroberteils eingesetzt werden kann.

Die Erfindung wird nachfolgend anhand von in den Zeichnungen dargestellten Ausführungsbeispielen näher erläutert.

In den Zeichnungen zeigt:
- Fig. 1: eine Teildarstellung eines Filters gemäß einer ersten Ausführungsform der Erfindung in einer geschnittenen Seitenansicht;
- Fig. 2: eine isolierte Ansicht eines Filterelementes, wie er in der Ausführungsform eines Filters gemäß der Fig. 3 zur Verwendung kommen kann, in einer geschnittenen Seitenansicht;
- Fig. 3: eine Teildarstellung eines Filters gemäß einer zweiten Ausführungsform der Erfindung in einer geschnittenen Seitenansicht;
- Fig. 4: einen erfindungsgemäßer Einsatz eines Filteroberteils, wie er in der Ausführungsform eines Filters gemäß der Fig. 1 zur Verwendung kommen kann, in einer ersten Ausführungsform in einer perspektivischen Ansicht und
- Fig. 5: einen erfindungsgemäßen Einsatz eines Filteroberteils, wie er in der Ausführungsform eines Filters gemäß der Fig. 3 zur Verwendung kommen kann, in einer zweiten Ausführungsform in einer perspektivischen Ansicht.

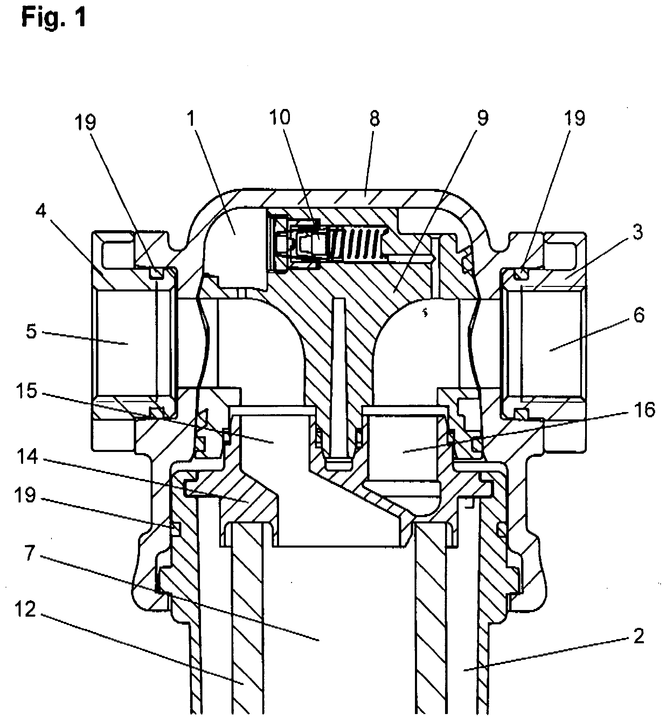

Ein Filter gemäß einer ersten Ausführungsform der vorliegenden Erfindung (Fig. 1) weist ein Filteroberteil 1 sowie ein Filterunterteil 2 auf.

Das Filteroberteil 1 umfasst neben zwei Anschlussflanschen 3, 4 zur Einbindung des Filters in ein bestehendes Druckluftsystem einen Einlasskanal 5 und einen Auslasskanal 6 zur Verbindung der Anschlussflansche 3, 4 mit dem Innenraum eines zylindrischen Filterelements 7 beziehungsweise mit einem ringförmigen (Filter- oder Sammel-) Raum, der von der Außenfläche des Filterelementes 7 und der Innenfläche des hohlzylindrischen Filterunterteils 2 gebildet wird.

Das Filteroberteil 1 weist ein druckfestes Aluminium-Gehäuse 8 auf, innerhalb dessen ein den Einlass- und Auslasskanal 5, 6 aufweisender Einsatz 9 aus Kunststoff angeordnet ist. Neben dem Einlass- und Auslasskanal 5, 6 weist der Einsatz 9 des Filteroberteils 1 einen Geber 10 einer Differenzdruckanzeige (nicht dargestellt) auf, der in einer Aufnahme des Einsatzes 9 auswechselbar befestigt ist.

Der Differenzdruckgeber 10 misst die Druckdifferenz zwischen dem Einlasskanal 5 und dem Auslasskanal 6 zur Bestimmung des durch das Filterelement 7 verursachten Druckabfalls in Folge zunehmender Verschmutzung. Der Druckabfall wird auf einer nicht dargestellten, vorzugsweise direkt an dem Filter angeordneten Differenzdruckanzeige angezeigt, so dass bei einer übermäßigen Verschmutzung des Filterelementes 7 die Notwendigkeit eines Wechsels des Filterelementes 7 erkennbar wird.

Das Filterelement 7 weist einen zylindrischen Mantel 12 auf, der aus einem Filtermaterial besteht. Je nach vorgesehenem Einsatz können verschiedene, aus dem Stand der Technik allgemein bekannte Filtermaterialien zum Einsatz kommen.

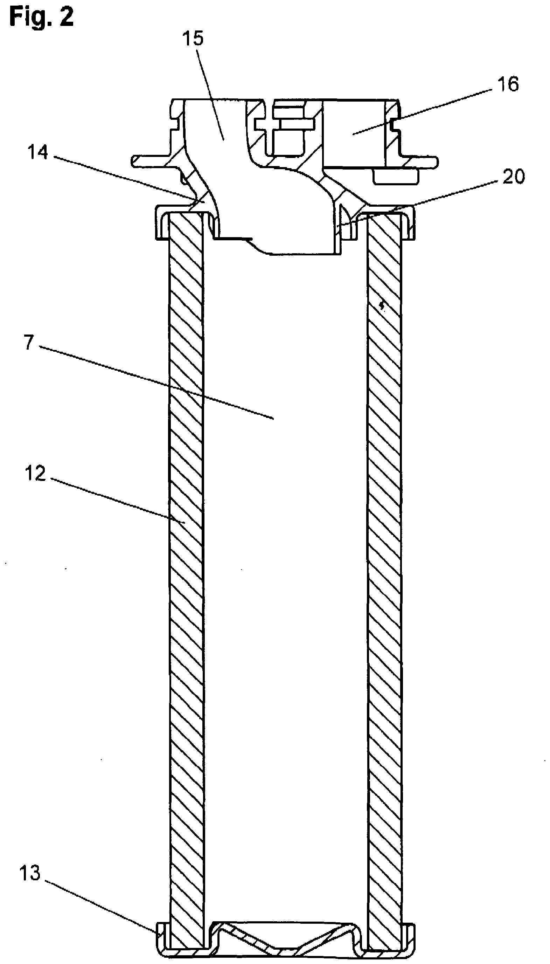

Das Filterelement 7 wird an seiner Unterseite mittels eines kreisförmigen Endstücks 13 verschlossen (vgl. Fig. 2). An seiner in montierter Position oberen Öffnung des hohlzylindrischen Filterelements 7 schließt sich ein Anschlusselement 14 an, dass in der vorliegenden Ausführungsform fest mit dem Filtermaterial verklebt ist und somit einen integralen Bestandteil des Filterelementes 7 darstellt.

Das Anschlusselement 14 bildet zwei Kanäle 15, 16, die in direkter Verbindung mit dem Einlass- und Auslasskanal des Filteroberteils stehen. In der dargestellten Stellung des Filterelementes verbindet der erste Kanal 15 (hier somit eine Funktion als Zulaufkanal), der einen S-förmigen Verlauf aufweist, den Einlasskanal 5 des Filteroberteils 1 mit dem Innenvolumen (Filterraum) des Filterelementes 7, während der zweite Kanal 16 (hier somit eine Funktion als Ablaufkanal) den Auslasskanal 6 des Filteroberteils 1 mit dem zwischen dem Filterelement 7 und dem Filterunterteil 2 gebildeten ringförmigen Raum (Sammelraum) verbindet. In der dargestellten Stellung des Filterelements 7 wird dieses somit von innen nach außen durchströmt.

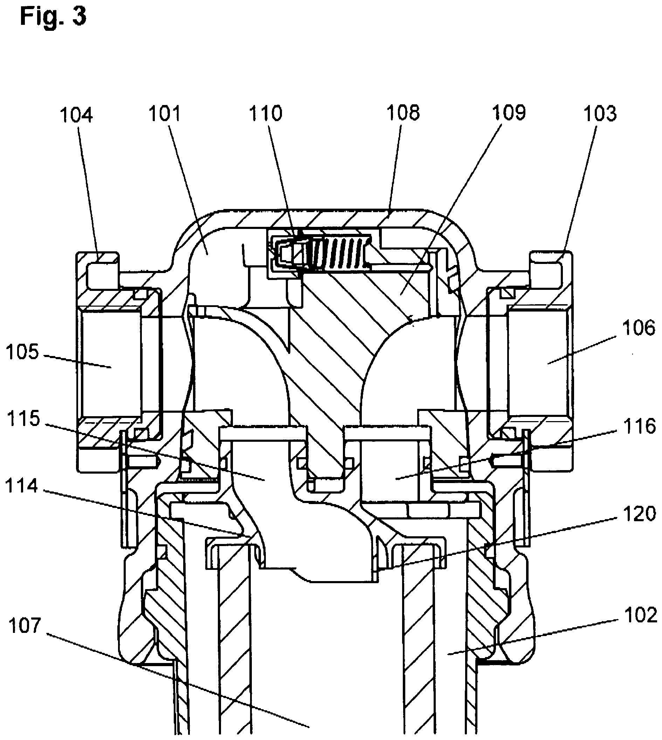

Die dem Filterelement 7 zugewandten Öffnungen des Einlass- und Auslasskanals 5, 6 sowie die entsprechenden sich damit überdeckenden Öffnungen der zwei Kanäle 15, 16 des Anschlusselements 14 sind punktsymmetrisch hinsichtlich einer 180°-Drehung um die Längsachse des Filterelementes 7 ausgebildet. Bei den in den Fig. 1 und 3 dargestellten Filtern besteht somit die Möglichkeit, durch eine 180°-Drehung des Anschlusselements 14 (beziehungsweise des gesamten Filterelementes 7), die zwei Kanäle 15, 16 des Anschlusselements 14 mit entweder dem Einlass- 5 oder dem Auslasskanal 6 zu verbinden, um somit die Richtung der Durchströmung des Filterelementes 7 umzukehren. Die in den Fig. 1 und 3 dargestellten Filter können daher sowohl zum Staubfiltern, wobei das Filterelement von außen nach innen durchströmt wird, als auch zum Koaleszenzfiltern, wobei das Filterelement von innen nach außen durchströmt wird, verwendet werden. Da ein Wechsel der Filterart bei einem im Einsatz befindlichen Filter eher eine Ausnahme ist, hat die Umkehrbarkeit der Durchströmungsrichtung des Filterelements insbesondere fertigungstechnische Vorteile, da für die zwei Filterarten identische Filter eingesetzt werden können.

Um eine einfache und exakte Montage des Filterelements 7 in den zwei möglichen Positionen zu gewährleisten, weist der in Fig. 1 dargestellte Filter eine Verbindung zwischen dem Filteroberteil 1 und dem Filterunterteil 2 mittels eines Bajonettverschlusses auf.

Zur Demontage des Filterunterteils 2 einschließlich des Filterelementes 7 wird dieses zunächst etwas in Richtung des Filteroberteils 1 angehoben und nach einer 90°-Drehung von dem Filteroberteils gelöst.

Die Anschlussflansche 3, 4 des Filters sind als separate Bauteile hergestellt, die mittels einer Schraubverbindung mit dem Gehäuse 8 des Filteroberteils 1 verbunden werden. In alternativen Ausführungsformen der Erfindung können diese auch direkt in das Gehäuse 8 integriert sein.

Eine Leckage von Druckluft aus dem Filter wird - wo erforderlich - durch O-Ring-Dichtungen 19 verhindert.

Das Filterelement der Fig. 2 unterscheidet sich von dem der Fig. 1 dahingehend, dass an der Mündung des in das Filterinnere führenden Kanals 15 ein teilkreisförmiges Leitelement 20 angeordnet ist. Dieses sorgt für eine Umlenkung des durch den S-förmigen Verlauf des Kanals 15 seitlich/schräg (d.h. nicht zentral) in das Filterinnere eintretenden Luftstroms in eine Richtung parallel zur Längsachse des Filterelements 7. Das Leitelement 20 ermöglicht somit eine bessere Verteilung der Druckluft über der gesamten Filterfläche.

Die Fig. 3 zeigt eine zweite Ausführungsform eines erfindungsgemäßen Filters, der sich hinsichtlich der Funktion sowie seines grundlegenden Aufbaus nicht wesentlich von der in der Fig. 1 dargestellten Ausführungsform eines Filters unterscheidet.

Übereinstimmend mit dem Filter der Fig. 1 weist das in der Fig. 3 dargestellte Filter ein Filteroberteil 101 mit einem druckfesten Gehäuse 108 aus Aluminium und daran angeordneten Anschlussflanschen 103, 104 auf. Ein in dem Gehäuse angeordneter Einsatz 109 aus Kunststoff weist einen Einlass- 105 und einen Auslasskanal 106 sowie einen Geber 110 für eine Differenzdruckanzeige (nicht dargestellt) auf. In dem Filterunterteil 102 ist ein hohlzylindrisches Filterelement 107 einschließlich eines zwei Kanäle 115, 116 aufweisenden Anschlusselements 114 angeordnet.

Im Gegensatz zu dem Anschlusselement 14 des Filters gemäß Fig. 1 ist der Kanal 115 des Anschlusselements 114, der den Einlasskanal 105 des Filteroberteils 102 mit dem Innenvolumen des Filterelementes 107 verbindet nicht S-förmig sondern schräg (bezogen auf die Längsachse des Filterelements 107) und geradlinig ausgebildet. An der Stelle, an dem der Kanal 115 in das Innenvolumen des Filterelementes 107 mündet, ist ein Leitelement 120 angeordnet, das in diesem Fall einen kreisförmigen Querschnitt aufweist.

Bei den Ausführungsformen des Filters gemäß der Fig. 1 und 3 weisen sowohl der Einlass-(5; 105) als auch der Auslasskanal (6; 106) einen in einer Ebene (der Zeichenebene) gebogenen, d.h. zweidimensionalen Verlauf auf. Ausgehend von den Anschlussflanschen (3, 4; 103, 104) verlaufen diese zunächst waagerecht radial auf die Längsachse des Filterelementes (7; 107) beziehungsweise des Filters zu, bis diese nach einem Knick des Verlaufs um 90° parallel zu der Längsachse verlaufen. Ein solcher Verlauf des Einlass- und Auslasskanals (5, 6; 105, 106) wird - aufgrund der Notwendigkeit der baulichen Trennung zwischen dem Einlass- und Auslasskanal (5, 6; 105, 106) - durch die Breite (beziehungsweise den Durchmesser) des Einsatzes (9; 109) (beziehungsweise des Filteroberteils (1; 101)) begrenzt. Aus Gründen der Differenzdruckoptimierung kann es jedoch wünschenswert sein, möglichst lange Einlass- und Auslasskanäle (5, 6; 105, 106) vorzusehen.

Die Erfindung sieht daher vorzugsweise vor, den erfindungsgemäßen Filter mit Einlass- und/oder Auslasskanälen zu versehen, die (bzw. deren Längsachsen) einen dreidimensional gebogenen Verlauf aufweisen, um auf diese Weise eine größere Kanallänge zu erzielen.

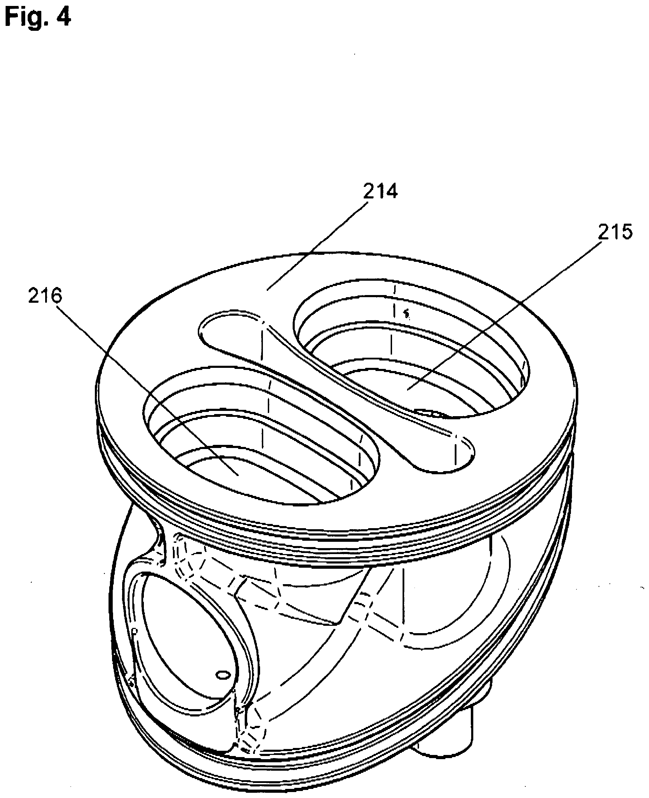

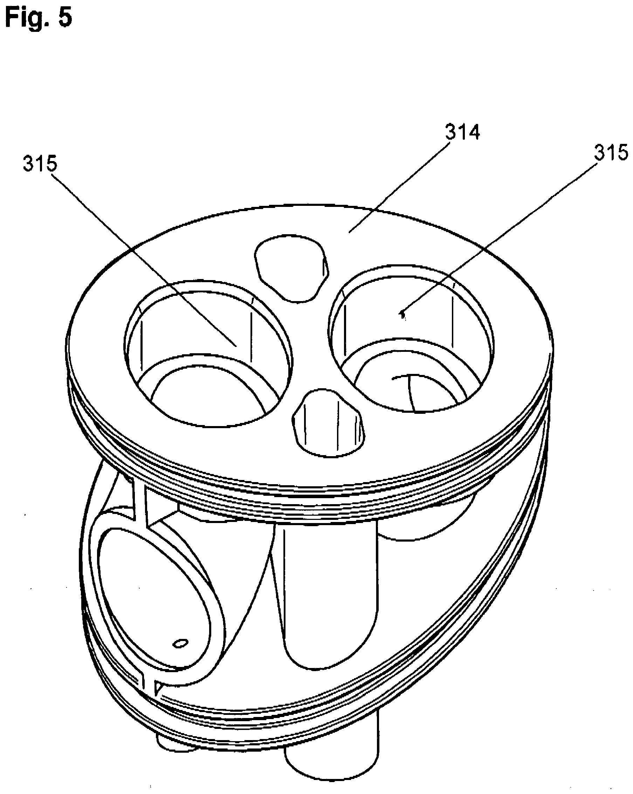

Dementsprechende Einsätze, wie sie bei einem erfindungsgemäßen Filter mit einem Filteroberteils aus einem druckfesten Gehäuse und einem den Einlass- und Auslasskanal aufweisenden Einsatz, beispielsweise dargestellt in den Fig. 1 und 3, zur Verwendung kommen können, sind in den Fig. 4 und 5 dargestellt.

Die Kanäle (215, 216; 315, 316) der Einsätze (214; 314) gemäß der Fig. 4 und 5 weisen einen dreidimensional gebogenen Verlauf auf. Anders als bei den Einlass- und Auslasskanälen (5, 6; 105, 106) gemäß der Fig. 1 und 2 verlaufen die Kanallängsachsen nicht in einer einzigen Ebene (d.h. zweidimensional), sondern dreidimensional zueinander. Mit anderen Worten: Die Verläufe der Einlass- und Auslasskanäle (215, 216; 315, 316) bei den Einsätzen gemäß der Fig. 4 und 5 unterscheiden sich von denen der Fig. 1 und 3 u.a. dadurch, dass diese - ausgehend von den Anschlussöffnungen für das Filterelement in Richtung des Kanalverlaufs - zusätzlich eine Winkeldrehung des Kanals um die eigene Längsachse ausführen.

Aufgrund der Komplexität des Verlaufs der Kanäle bei den erfindungsgemäßen Einsätzen der Fig. 4 und 5 sind diese schwierig herstellbar. Die erfindungsgemäßen Filter gemäß der Fig. 1 und 3, die jeweils ein Filteroberteil mit einem druckfesten Gehäuse aus Aluminium und einem auch komplexe Kanalverläufe zulassenden, vorzugsweise auswechselbaren Einsatz aus Kunststoff aufweisen können, ermöglichen auf vorteilhafte Weise die wirtschaftliche Herstellung eines Filters mit den erfindungsgemäßen, gebogen verlaufenden Einlass- und Auslasskanälen.

## Patentansprüche

1. Filter mit einem mindestens einen Einlass- (5; 105) und mindestens einen Auslasskanal (6; 106) aufweisenden Oberteil (1; 101) und einem ein Filterelement (7; 107) aufweisenden Unterteil (2; 102), **dadurch gekennzeichnet, dass** das Oberteil (1; 101) ein Gehäuse (8; 108) und einen Einsatz (9; 109) aufweist, in dem der Ein- und Auslasskanal (5, 6; 105, 106) verläuft, wobei das Filterelement (7; 107) ein Anschlusselement (14; 114) mit einem Zulauf- (15; 115) und einem Ablaufkanal (16; 116) aufweist, die den Filterraum und den Sammelraum mit dem Ein- und Auslasskanal (5, 6; 105, 106) des Oberteils (1; 101) verbinden.

2. Filter gemäß Anspruch 1, **dadurch gekennzeichnet, dass** der Einsatz (9; 109) austauschbar innerhalb des Gehäuses (8; 108) befestigt ist.

3. Filter gemäß Anspruch 1 oder 2, **dadurch gekennzeichnet, dass** der Einsatz (9; 109) drehbar innerhalb des Gehäuses (8; 108) befestigt ist.

4. Filter gemäß einem der vorhergehenden Ansprüche, **dadurch gekennzeichnet, dass** das Gehäuse (8; 108) druckfest und der Einsatz (9; 109) differenzdruckfest ausgebildet ist.

5. Filter gemäß einem der vorhergehenden Ansprüche, **dadurch gekennzeichnet, dass** der Ein- und/oder Auslasskanal (5, 6; 105, 106) einen dreidimensional gebogenen Verlauf aufweist.

6. Filter gemäß einem der vorhergehenden Ansprüche, **dadurch gekennzeichnet, dass** der Bogenradius des Ein- und Auslasskanals (5, 6; 105, 106) größer ist als der halbe Durchmesser des Oberteils (1; 101).

7. Filter gemäß einem der vorhergehenden Ansprüche, **dadurch gekennzeichnet, dass** das Gehäuse (8; 108) mindestens eine Ein- und eine Auslassöffnung aufweist, die die entsprechenden Öffnungen des Einlass- und Auslasskanals (5, 6; 105, 106) des Einsatzes (9; 109) zumindest teilweise überdecken, und in Anschlusselemente (3, 4; 103, 104) integriert sind, die zum Anschluss an externe Leitungen ausgebildet sind.

8. Filter gemäß einem der vorhergehenden Ansprüche, **dadurch gekennzeichnet, dass** der Ein- oder Auslasskanal (5, 6; 105, 106) direkt oder indirekt in einen durch ein Filtermaterial des Filterelementes (7; 107) begrenzten Filterraum und der andere Kanal direkt oder indirekt in einen Sammelraum mündet, der von dem Filterelement (7; 107) und dem Unterteil (2; 102) des Filters gebildet wird.

9. Filter gemäß einem der Ansprüche 1 bis 8, **dadurch gekennzeichnet, dass** das Filterelement (7; 107) im Bereich der Mündung des Zulauf- (15; 115) beziehungsweise Ablaufkanals (16; 116) in den Filterraum mindestens ein Leitelement (20; 120) aufweist.

10. Filter gemäß einem der vorhergehenden Ansprüche, **dadurch gekennzeichnet, dass** die dem Filterelement (7; 107) zugewandten Öffnungen des Ein- und Auslasskanals (5, 6; 105, 106) spiegel- oder punktsymmetrisch sind.

11. Filter gemäß Anspruch 10, **dadurch gekennzeichnet, dass** die Öffnungen des Ein- und/oder Auslasskanals (5, 6; 105, 106) nieren- oder halbkreisförmig sind.

12. Filter gemäß einem der Ansprüche 1 bis 11, **dadurch gekennzeichnet, dass** das Anschlusselement (14; 114) gegenüber dem Oberteil (1; 101) drehbar ist, so dass der Filterraum wahlweise mit dem Ein- und Auslasskanal (5, 6; 105, 106) des Oberteils (1; 101) verbindbar ist.

13. Filter gemäß einem der vorhergehenden Ansprüche, **dadurch gekennzeichnet, dass** der Einsatz (14; 114) mindestens eine Aufnahme für ein Funktionsbauteil aufweist.

14. Filter gemäß Anspruch 13, **gekennzeichnet durch** eine Aufnahme für einen Geber (10; 110) einer Differenzdruckanzeige.

15. Filter gemäß einem der vorhergehenden Ansprüche, **gekennzeichnet durch** ein hohlzylindrisches Filterelement (7; 107).

16. Filter gemäß Anspruch 15, **dadurch gekennzeichnet, dass** der Mantel des hohlzylindrischen Filterelementes (7; 107) zumindest teilweise aus Filtermaterial besteht.

## Claims

1. Filter with an upper part (1; 101) having at least one inlet (5; 105) and at least one outlet channel (6; 106) and a lower part (2; 102) having a filter element (7; 107), **characterised in that** the upper part (1, 101) has a housing (8, 108) and an insert (9, 109), in which the inlet and outlet channel (5, 6; 105, 106) extend, wherein the filter element (7, 107) has a connection element (14, 114) with a supply (15, 115) and a drainage channel (16; 116), which connect the filter chamber and the collection chamber with the inlet and outlet channel (5, 6; 105, 106) of the upper part (1; 101).

2. Filter according to claim 1, **characterised in that** the insert (9; 109) is replaceably fitted inside the housing (8; 108).

3. Filter according to claim 1 or 2, **characterised in that** the insert (9; 109) is rotatably fitted inside the housing (8, 108).

4. Filter according to one of the preceding claims, **characterised in that** the housing (8; 108) is designed to be pressure resistant and the insert (9; 109) to be differential pressure resistant.

5. Filter according to one of the preceding claims, **characterised in that** the inlet and/or outlet channel (5,6; 105, 106) has/have a three-dimensional arced expansion.

6. Filter according to one of the preceding claims, **characterised in that** the arc radius of the inlet and outlet channel (5, 6; 105, 106) is greater than half the diameter of the upper part (1; 101).

7. Filter according to one of the preceding claims, **characterised in that** the housing (8; 108) has at least one inlet and outlet opening, which at least partially cover the corresponding opening s of the inlet and outlet channel (5, 6; 105, 106) of the insert (9; 109), and are integrated into connection elements (3, 4; 103, 104) formed for connecting to external lines.

8. Filter according to one of the preceding claims, **characterised in that** the inlet or outlet channel (5, 6; 105, 106) is/are formed directly or indirectly in a filter chamber delimited by a filter material of the filter element (7; 107) and the other channel opens directly or indirectly into a collection chamber formed by the filter element (7; 107) and the lower part (2; 102) of the filter.

9. Filter according to one of the claims 1 to 8, **characterised in that** the filter element (7; 107) has at least one guide element (20; 120) in the area of the opening of the supply (15; 115) or drainage channel (16; 116) into the filter chamber.

10. Filter according to one of the preceding claims, **characterised in that** the openings of the inlet and outlet channel (5, 6; 105, 106) facing the filter element (7; 107) are mirror or point symmetrical.

11. Filter according to claim 10, **characterised in that** the openings of the inlet and/or outlet channel (5, 6; 105, 106) are kidney-shaped or semi-circular.

12. Filter according to one of the claims 1 to 11, **characterised in that** the connection element (14; 114) can be rotated in relation to the upper part (1, 101), so that the filter chamber can optionally be connected with the inlet and outlet channel (5, 6; 105, 106) of the upper part (1; 101).

13. Filter according to one of the preceding claims, **characterised in that** the insert (14; 114) has at least one take-up for a functional component.

14. Filter according to claim 13, **characterised by** a take-up for a transmitter (10; 110) of a differential pressure display.

15. Filter according to one of the preceding claims, **characterised by** a hollow cylindrical filter element (7; 107).

16. Filter according to claim 15, **characterised in that** the sleeve of the hollow cylindrical filter element (7; 107) consist at partly of filter material.

## Revendications

1. Filtre avec une partie supérieure (1 ; 101) présentant au moins un canal d'entrée (5 ; 105) et au moins un de sortie (6 ; 106) ainsi qu'une partie inférieure (2 ; 102) présentant un élément filtrant (7 ; 107) **caractérisé en ce que** la partie supérieure (1 ; 101) présente un boîtier (8 ; 108) et un embout (9 ; 109) dans lequel le canal d'entrée et de sortie (5, 6 ; 105, 106) passe, l'élément filtrant (7 ; 107) présentant un élément de raccordement (14 ; 114) avec un canal d'alimentation (15 ; 115) et un canal d'évacuation (16 ; 116) qui relient la chambre de filtrage et la chambre collectrice au canal d'entrée et de sortie (5, 6 ; 105, 106) de la partie supérieure (1 ; 101).

2. Filtre selon la revendication 1, **caractérisé en ce que** l'embout (9 ; 109) est fixé de manière interchangeable à l'intérieur du boîtier (8 ; 108).

3. Filtre selon la revendication 1 ou 2, **caractérisé en ce que** l'embout (9 ; 109) est fixé de manière rotative à l'intérieur du boîtier (8 ; 108).

4. Filtre selon l'une quelconque des revendications précédentes, **caractérisé en ce que** le boîtier (8 ; 108) est résistant à la pression et l'embout (9 ; 109) est résistant à la pression différentielle.

5. Filtre selon l'une quelconque des revendications précédentes, **caractérisé en ce que** le canal d'entrée et/ou de sortie (5, 6 ; 105, 106) présente un tracé courbé tridimensionnel.

6. Filtre selon l'une quelconque des revendications précédentes, **caractérisé en ce que** le rayon de courbure du canal d'entrée et de sortie (5, 6 ; 105, 106) est plus grand que la moitié du diamètre de la partie supérieure (1 ; 101).

7. Filtre selon l'une quelconque des revendications précédentes, **caractérisé en ce que** le boîtier (8 ; 108) présente au moins un orifice d'entrée et un de sortie qui recouvrent au moins en partie les orifices correspondants du canal d'entrée et de sortie (5, 6 ; 105, 106) de l'embout (9 ; 109), et sont intégrés dans les éléments de raccordement (3, 4 ; 103, 104) qui sont destinés au raccordement aux conduites externes.

8. Filtre selon l'une quelconque des revendications précédentes, **caractérisé en ce que** le canal d'entrée ou de sortie (5, 6 ; 105, 106) débouche directement ou indirectement dans la chambre de filtrage limitée par un matériau filtrant de l'élément filtrant (7 ; 107) et l'autre canal directement ou indirectement dans une chambre collectrice qui est formée de l'élément filtrant (7 ; 107) et de la partie inférieure (2 ; 102) du filtre.

9. Filtre selon l'une quelconque des revendications 1 à 8, **caractérisé en ce que** l'élément filtrant (7 ; 107) présente au moins un élément conducteur (20 ; 120) dans la chambre de filtrage au niveau de l'embouchure du canal d'alimentation (15 ; 115) ou du canal d'évacuation (16 ; 116).

10. Filtre selon l'une quelconque des revendications précédentes, **caractérisé en ce que** les orifices du canal d'entrée et de sortie (5, 6 ; 105, 106) orientés vers l'élément filtrant (7 ; 107) sont disposés à symétrie ponctuelle ou spéculaire.

11. Filtre selon la revendication 10, **caractérisé en ce que** les orifices du canal d'entrée et/ou de sortie (5, 6 ; 105, 106) sont en forme de demi-cercle ou de rein.

12. Filtre selon l'une quelconque des revendications 1 à 11, **caractérisé en ce que** l'élément de raccordement (14 ; 114) peut tourner par rapport à la partie supérieure (1 ; 101) de telle sorte que la chambre de filtrage peut être raccordée au choix au canal d'entrée et de sortie (5, 6 ; 105, 106) de la partie supérieure (1 ; 101).

13. Filtre selon l'une quelconque des revendications précédentes, **caractérisé en ce que** l'embout (14 ; 114) présente au moins un logement destiné à un composant fonctionnel.

14. Filtre selon la revendication 13, **caractérisé en** un logement pour un transmetteur (10 ; 110) d'un afficheur de pression différentielle.

15. Filtre selon l'une quelconque des revendications précédentes, **caractérisé en** un élément filtrant (7 ; 107) cylindrique creux.

16. Filtre selon la revendication 15, **caractérisé en ce que** l'enveloppe de l'élément filtrant (7 ; 107) cylindrique creux est au moins partiellement en matériau filtrant.
